Europäisches Patentamt

(19) **European Patent Office**

Office européen des brevets

(11) Publication number: **0 281 375**
**A2**

# (12) EUROPEAN PATENT APPLICATION

(21) Application number: **88301812.9**

(22) Date of filing: **02.03.88**

(51) Int. Cl.⁴: **G 01 N 27/56**

(30) Priority: **04.03.87 US 21846**

(43) Date of publication of application:
**07.09.88 Bulletin 88/36**

(84) Designated Contracting States:
**BE CH ES FR GB IT LI SE**

(71) Applicant: **WESTINGHOUSE ELECTRIC CORPORATION**
**Westinghouse Building Gateway Center**
**Pittsburgh Pennsylvania 15222 (US)**

(72) Inventor: **Ahmed, Mohammed Mushtaq**
**106 Pine Tree Drive**
**Turtle Creek, PA 15145 (US)**

**Archer, David Horace**
**114 Kentzel Road**
**Pittsburgh, PA 15237 (US)**

(74) Representative: **van Berlyn, Ronald Gilbert**
**23, Centre Heights**
**London, NW3 6JG (GB)**

(54) **Oxygen analyzer.**

(57) A gas analyzer for measuring the concentration of oxygen and combustible gases in a gas stream includes an electrochemical cell maintained at about 800°C and having electrodes attached to a process side and a reference side in which a cavity is formed having a diffusion limiting port forming the entrance to the cavity. The size of the port is determined by:

$R = W/(k*D*C)$, where

r is the radius of the diffusion limiting port;

W is the diffusion rate of combustible gases in the gas stream through the port;

D is the diffusion coefficient of the combustible gases in the gas stream;

C is the concentration of the combustible gases in the gas stream; and

$k = 2*\pi*R^2/((2*r*1)+R^2)$, where

R is the radius of the electrochemical cell and

1 is the difference between the length L and the radius R of the electrochemical cell.

The voltage between the electrodes gives indication of the concentration of $O_2$ and combustible gases in the stream.

FIG. 3.

**Description**

## OXYGEN ANALYZER

Background of the Invention

The invention relates to an analyzer for use in determining the concentration of oxygen and combustible gases in a gas stream.

It is important to monitor the composition of the gas stream resulting from gasification processes in which solid fuels such as coal, biomass and peat are converted into gaseous fuels containing hydrogen, methane and carbon monoxide. In such processes the solid fuel is burned in the presence of oxygen. If the oxygen concentration becomes too high, the flow of oxygen into the gasifier must be stopped within seconds to avoid a sudden rise in the temperature of the gas stream and/or the potential for the accumulation of explosive fuel-oxygen mixtures in cool regions of the gasification system.

Common techniques for analyzing such gas streams include chromatography and spectroscopy. One problem associated with the use of these techniques in connection with gasification processes is that they require the gas stream being analyzed to be at a relatively low temperature. Further, the response time of such systems to changes in the composition of the gas stream can be in excess of 1 to 5 minutes.

Oxygen analyzers based on the principles of oxygen ion conductivity through a solid electrolyte electrochemical cell have been developed, but heretofore have not been used in connection with gasification processes. These analyzers are designed for applications at ambient pressure to measure oxygen or small quantities of combustibles, close to stoichiometric conditions, in a gas.

SUMMARY OF THE INVENTION

The invention in its broad form resides in a gas gauge device for measuring the concentration of oxygen and combustible gases in a gas stream, comprising: an electrochemical cell of radius R and length L, in which a cavity is formed having a diffusion limiting port of radius 'r' forming the entrance to said cavity, the electrochemical cell having a reference side and a process side, characterized by the size of said diffusion limiting port being determined according to the relationship:

$r = W/(k*D*C)$, where

r is the radius of said diffusion limiting port;

W is the diffusion rate of combustible gases in said gas stream through said diffusion limiting port;

D is the diffusion coefficient of said combustible gases in said gas stream;

C is the concentration of said combustible gases in said gas stream; and

$k = 2*\pi*R^2/((2*r*1)+R^2)$, where

R is the radius of said electrochemical cell and

1 is the difference between the length L and the radius R of said electrochemical cell,

said process side being flow communication with the portion of said gas stream flowing into said cavity through said diffusion limiting port, said reference side being in flow communication with a reference gas stream; said electrochemical cell being additionally characterized by: heating means for maintaining said electrochemical cell at a temperature of at least about 800°C; a pair of elec trodes, one of said electrodes being attached to said process side of said electrochemical cell and the other of said electrodes being attached to said reference side of said electrochemical cell for establishing a potential difference across said electrochemical cell such that oxygen ions flow from said reference gas stream to said gas stream through said electrochemical cell in the direction of lower oxygen partial pressure to create an electrical current; means for measuring said established voltage; means for measuring said current at said established voltage; and means for translating said measurement of said current at said established voltage under reducing conditions into an indication of the concentration of the combustible gases in said gas stream and under oxidizing conditions into an indication of the oxygen concentration in said gas stream.

The cavity further includes a process side in flow communication with the portion of the gas stream flowing into the cavity through the diffusion limiting port and a reference side in flow communication with a reference gas stream. Heating apparatus maintains the electrochemical cell at a temperature of at least about 800°C. Electrodes attached to the process side and the reference side of the electrochemical cell establish a potential difference, or voltage, across the electrochemical cell such that oxygen ions flow through the electrochemical cell in the direction of lower oxygen partial pressure to create an electrical current. The analyzer further includes apparatus to measure both the established voltage between the electrodes and the current at the established voltage and apparatus to translate the established voltage and the current at the established voltage under reducing conditions into an indication of the concentration of the combustible gases in the gas stream and under oxidizing conditions into an indication of the oxygen concentration in the gas stream.

The electrochemical cell is preferably mounted at one end of an elongated cylinder. The elongated cylinder, in turn, is preferably mounted within a pressure shell. The pressure shell has a passageway therethrough from which the elongated cylinder and electrochemical cell protrude. The pressure is maintained within the pressure shell so that the pressure differential between the process side and the reference side of the cavity of the electrochemical cell is less than about 10 psig.

The present invention preferably provides the capabilities of (i) responding to a change in the composition of a gas stream in less than 20 seconds, and further, the present invention is capable of (ii) analyzing the concentration of oxygen or fuel gases in a gas stream at a temperature generally less than 1500°C.

## DESCRIPTION OF THE DRAWINGS

A more detailed understanding of the invention may be had from the following description of a preferred embodiment, given by way of example only and to be understood in conjunction with the accompanying drawing wherein:

Figure 1 is a sectional view of an analyzer constructed according to a preferred embodiment of the present invention.

Figure 2 is a sectional view of the sensor assembly of the analyzer shown in Figure 1.

Figure 3 is a schematic illustration of the lower portion of the electrochemical cell shown in Figure 2.

Figure 4 is an enlarged view, taken along the line IV-IV of Figure 5, of the head assembly and pressure shell assembly of the analyzer shown in Figure 1.

Figure 5 is a cross-sectional view, taken along the line V-V of Figure 4, of the head assembly and pressure shell assembly of the analyzer shown in Figure 1.

Figure 6 is a sectional view of the protection tube assembly of the analyzer shown in Figure 1.

Figure 7 is a sectional view, taken along the line VII-VII of Figure 8, of the pressure shell assembly of the analyzer shown in Figure I.

Figure 8 is a cross-sectional view, taken along the line VIII-VIII of Figure 7, of the pressure shell assembly of the analyzer shown in Figure I.

Figure 9 is a sectional view of the heater assembly of the analyzer shown in Figure I.

Figure 10 is an enlarged sectional view of the lower portion of the heater assembly and the lower portion of the electrochemical cell of the analyzer shown in Figure I.

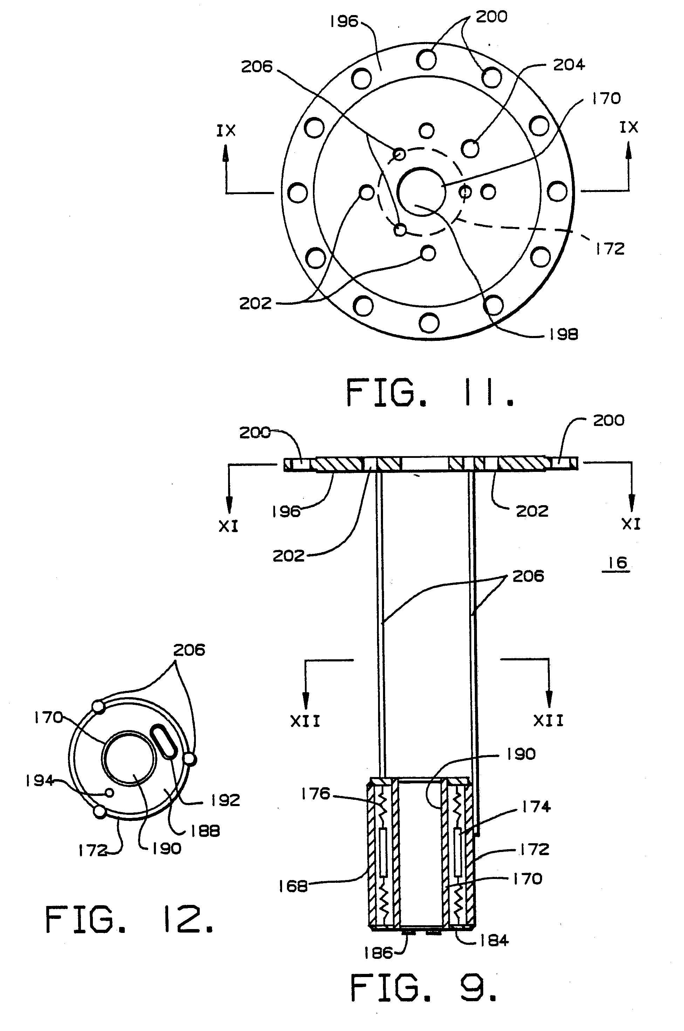

Figure II is a cross-sectional view, taken along the line XI-XI of Figure 9, of the heater assembly of the analyzer shown in Figure I.

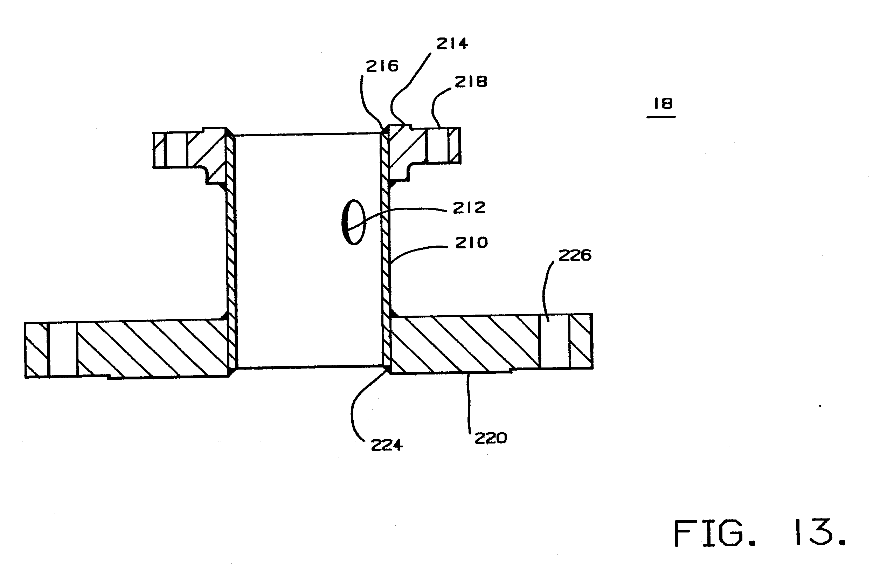

Figure 12 is a cross-sectional view, taken along the line XII-XII of Figure 9, of the heater assembly of the analyzer shown in Figure I.

Figure 13 is a sectional view of the adapter assembly of the analyzer shown in Figure I.

### Detailed Description of the Preferred Embodiments

The analyzer 10 of the present invention includes a probe assembly 12, a pressure shell assembly 14, a heater assembly 16 and an adapter assembly 18.

The probe assembly 12 (Figures I through 6) of the analyzer 10 is formed of a sensor assembly 20, a head assembly 22 and a protection tube assembly 24.

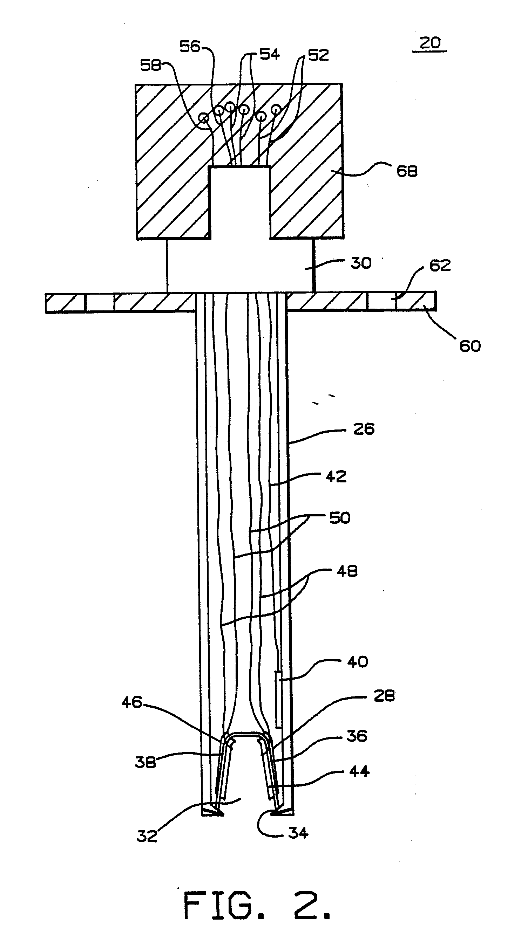

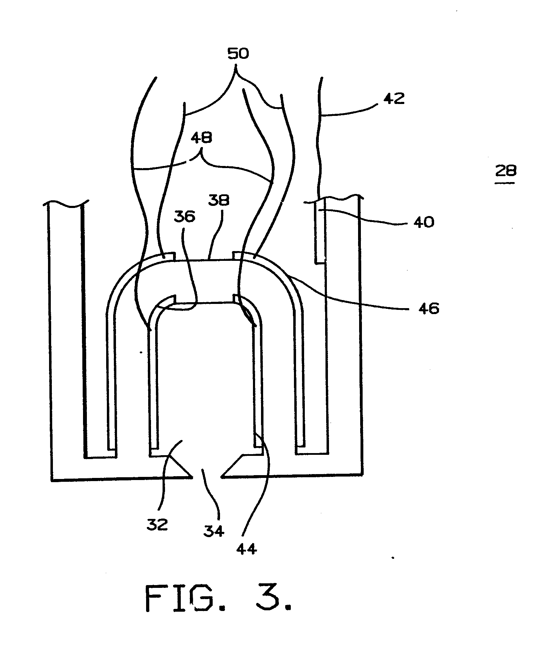

The sensor assembly 20 (Figures I, 2 and 3) includes an elongated sensor cylinder 26, an electrochemical cell 28 disposed at the lower end of the sensor cylinder 26 and a housing 30. The electrochemical cell 28 (Figures 2 and 3) includes a cavity 32. A diffusion limiting port 34 forms the entrance to the cavity 32. The size of the diffusion limiting port 34 is determined according to engineering principles such that the countercurrent diffusion flow of the various fuel components: hydrogen, carbon monoxide and methane, and of the corresponding combustion products: water vapor and carbon dioxide, can be balanced by the oxygen ion flow through the solid electrolyte of the electrochemical cell 28. If the radius of the diffusion limiting port 34 is considerably smaller than the radius of the cavity 32 of the electrochemical cell 28, the diffusion rate of the gas into the electrochemical cell 28 can be approximated by the diffusion of the gas through a circular port to a surrounding hemisphere of radius R. Thus, the electrochemical cell 28 has cavity 32 of a length L and a radius R. The difference, l, between the length L of the cavity 32 of the electrochemical cell 28 and the radius R of the cavity 32 of the electrochemical cell 28 is the farthest distance that the molecules of the combustible gas diffuse from a hemisphere of radius R within the cavity 32 of the electrochemical cell 28 to reach the process side 36 of the electrochemical cell 28. Under such conditions, the size of the diffusion limiting port 34 is related to the diffusion rate of the combustible gases in the process gas stream, the diffusion coefficient of the combustible gases, the concentration of the combustible gases in the process gas stream and to the dimensions of the cavity 32 of the electrochemical cell 28 by the following relationship:

$r = W/(k*D*C)$, where

r is the radius of the diffusion limiting port 34;

W is the diffusion rate of combustible gases in the process gas stream through the diffusion limiting port 34;

D is the diffusion coefficient of the combustible gases in the process gas stream;

C is the concentration of the combustible gases in the process gas stream; and

$k = 2*\pi*R^2/((2*r*l)+R^2)$ where

R is the radius of the cavity 32 of the electrochemical cell 28 and

l is the difference between the length L and the radius R of the electrochemical cell 28.

Preferably, a range of radii of the diffusion limiting port 34 is determined by completing the above equation separately for each combustible gas expected to be encountered by the analyzer 10 and the expected concentration range of those gases. A radius of the diffusion limiting port 34 is then chosen that will accommodate the conditions expected to be encountered most often.

The cavity 32 further includes a process side 36 in flow communication with the portion of the gas stream flowing into the cavity 32 through the diffusion limiting port 34 and a reference side 38 in flow communication with the reference gas stream. A thermocouple 40, preferably an S-type (platinum - 10% rhodium) is disposed within the electrochemical cell 28 to monitor the temperature of the electrochemical cell 28. Thermocouple wires 42 lead from the thermocouple 40 to the housing 30. Preferably the electrochemical cell 28 is formed of a ceramic material and an electrolyte such as an oxide that is capable of conducting oxygen ions. Suitable oxides include zirconium oxide, cesium oxide and thorium oxide. The most preferred type of electrochemical cell 28 is formed of zirconium oxide that is doped with a divalent molecule, particularly an oxide such as yttrium oxide, magnesium oxide or calcium oxide. An electrode 44 is attached to the process side 36 of the electrochemical cell 28. An electrode 46 is attached to the reference side 38 of the electrochemical cell 28. The electrodes 44 and 46 are attached to leads 48 and 50, respectively, which extend from the electrodes 44 and 46 to the housing 30. Preferably, the electrodes 44 and 46 are platinum.

The housing 30 is mounted on the opposite end of the sensor cylinder 26 from the electrochemical cell 28. The electrical connections 52 between the head assembly 22 and the sensor assembly 20 for exciting the electrochemical cell 28 and for detecting the output of the electrochemical cell 28, the connections 54 between the thermocouple 40 and the head assembly 22 and the connections 56 between the head assembly 22 and the sensor assembly 20 for the reference gas, the connection 58 between the head assembly 22 and the sensor assembly 20 for the calibration gas extend from the housing 30 to the head assembly 22. The housing 30 rests on a circular flange 60. The flange 60 includes a plurality of bores 62 therethrough for bolts 64 to enable the flange 60 to be secured to the heating assembly 16 and a bore 66 for the wiring to the heater assembly 16. The housing 30 includes a threaded recess (not shown) to enable the protection tube assembly 24 to be secured to the housing 30.

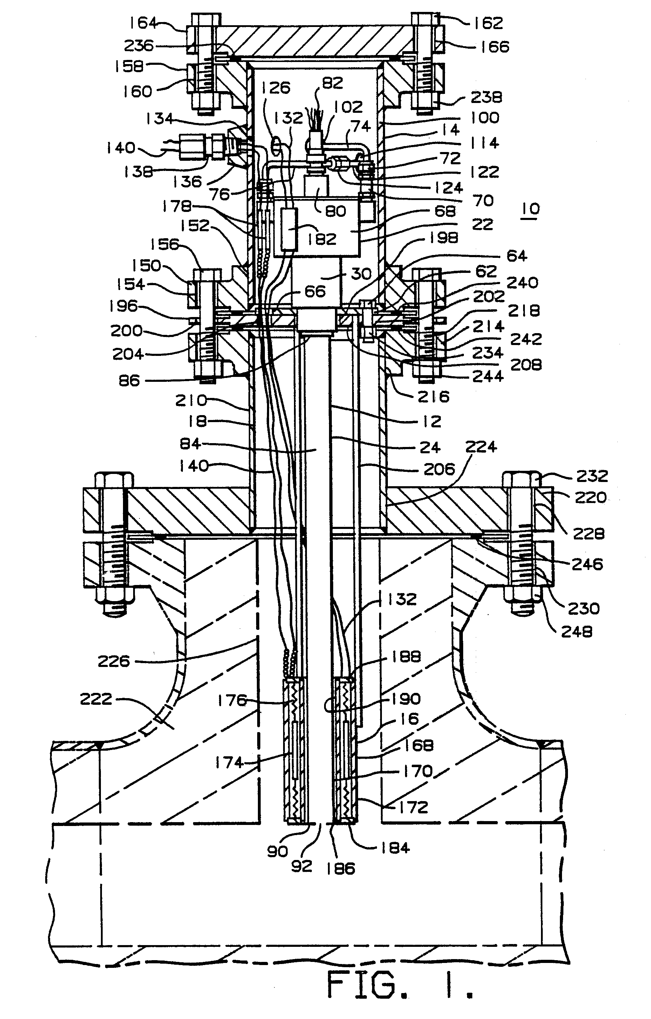

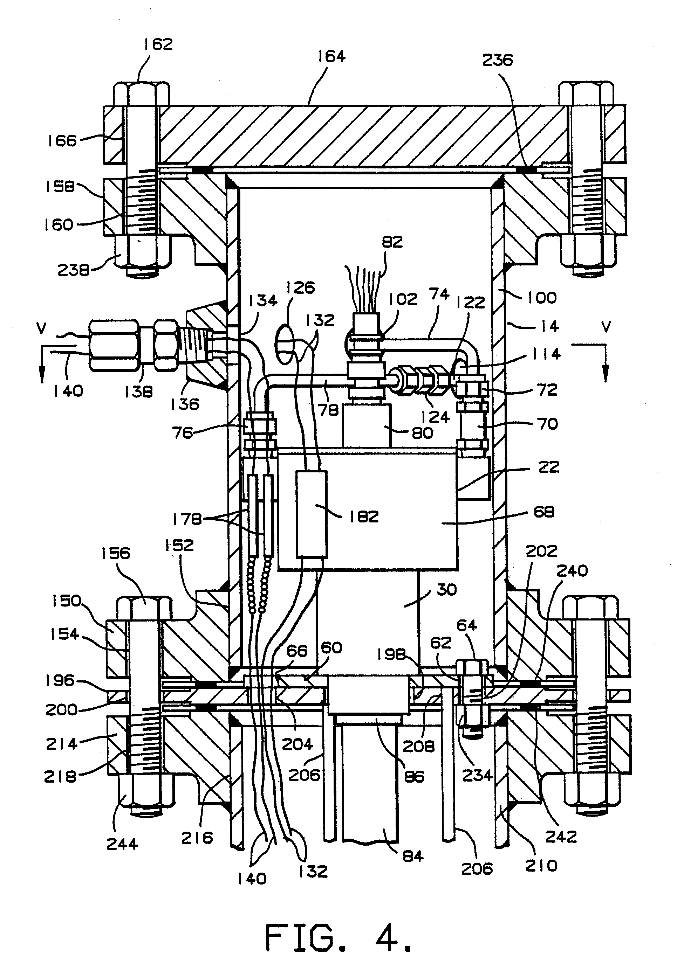

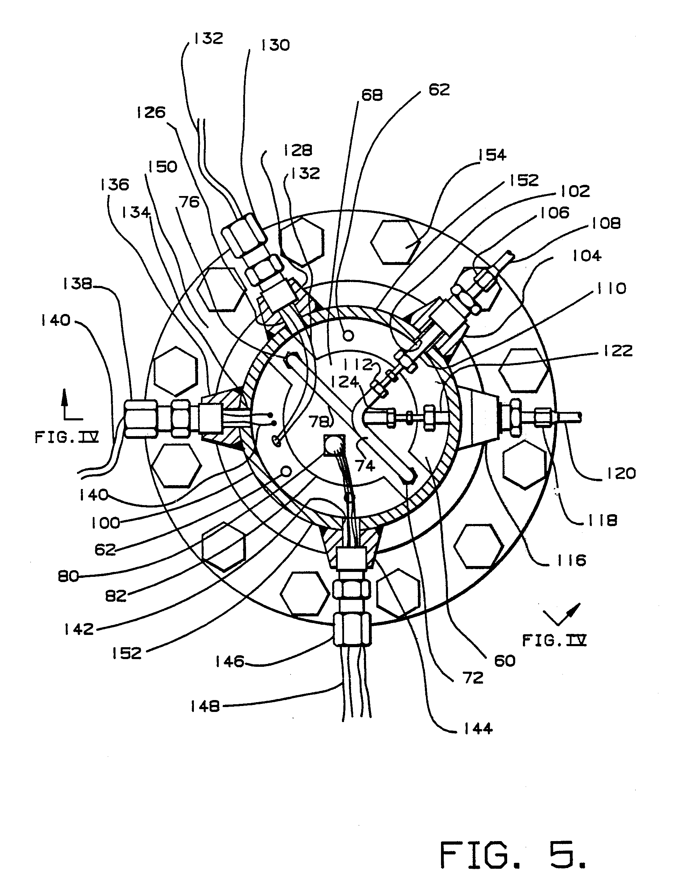

The head assembly 22 (Figures 1, 4 and 5) includes a cylinder 68 having a check valve 70 and a connector 72 between the first calibration gas conduit 74 and the connection 58 from the sensor assembly 20 and a connector 76 between the first reference gas conduit 78 and the connection 56 from the sensor assembly 20. A terminal board (not shown) is mounted within the cylinder 68 for connecting the leads 48 and 50 from the electrodes 44 and 46 of the sensor assembly 20 with electrical connections (not shown) to an amphenol connector, or plug, 80, which is mounted on the cylinder 68. Gage wires 82 extend from the plug 80 through the pressure shell assembly 14 to the exterior of the pressure shell assembly 14.

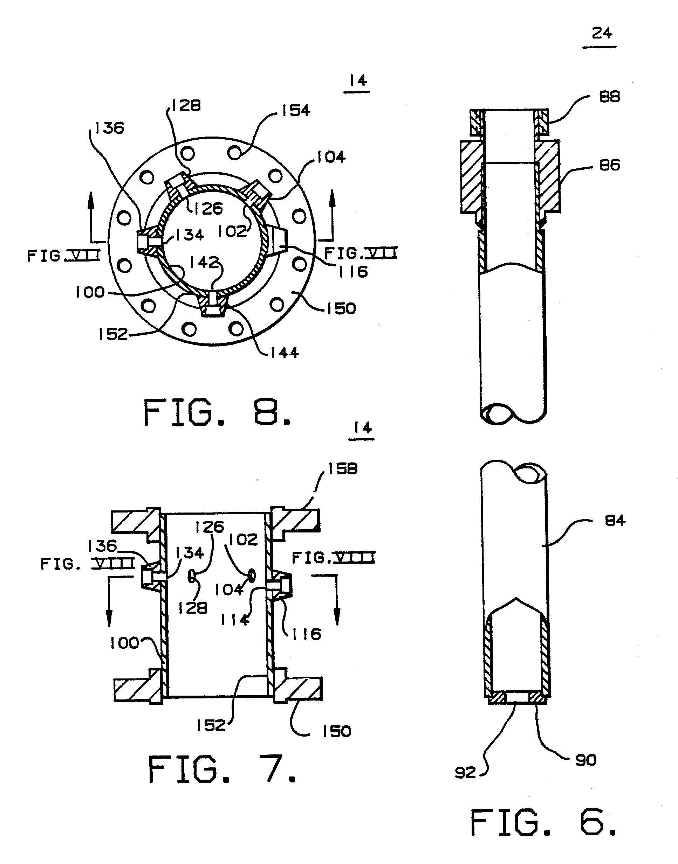

The protection tube assembly 24 (Figures 1 and 6) includes an elongated hollow protection tube cylinder 84 through which the sensor cylinder 26 extends. An annular collar 86 is disposed on the upper end of the protection tube cylinder 84. The collar 86 includes a threaded portion 88 which is adapted to engage the threaded recess of the housing 30 of the sensor assembly 20. An annular cap 90 is disposed on the lower end of the cylinder 84. The cap 90 includes a bore 92 therethrough through which the process gas being analyzed enters, and the calibration gas and the reference gas leave the annular space 94 between the sensor cylinder 26 and the protection tube cylinder 84. A filter 96, formed from a material such as quartz wool or a ceramic material, can be placed in the space 98 between the electrochemical cell 28 and the cap 90 to minimize damage to the electrochemical cell 28 due to blockage of the diffusion limiting port 34 by contaminants in the process gas. Use of such a filter 96 will result in a slower response time of the analyzer 10 to changes in the process gas composition.

The pressure shell assembly 14 (Figures 1, 4, 5, 7 and 8) includes a hollow pressure shell cylinder 100. A first bore 102 through the side of the pressure shell cylinder 100 has a fitting 104 through which a connection 106 is made between the calibration gas inlet 108 and a second calibration gas conduit 110. A connection 112 connects the second calibration gas conduit 110 with the first calibration gas conduit 74. A second bore 114 through the side of the pressure shell cylinder 100 has a fitting 116 through which a connection 118 is made between the reference gas inlet 120 and a second reference gas conduit 122. A connection 124 connects the second reference gas conduit 122 with the first reference gas conduit 78. A third bore 126 through the side of the pressure shell cylinder 100 has a fitting 128 in which a fitting 130 is threaded for the heater thermocouple wires 132. A fourth bore 134 through the side of the pressure shell cylinder 100 has a fitting 136 in which a fitting 138 is threaded for heater wires 140. A fifth bore 142 through the side of the pressure shell cylinder 100 has a fitting 144 in which a fitting 146 is threaded for gage wires 82. The portion of the gage wires 82 that extend outside of the pressure shell cylinder 100 is noted as 148. It is important that the temperature within the pressure shell cylinder 100 be less than about 200°C in order to maintain the head assembly 22 and the housing 30 of the sensor assembly 20 at a temperature of less than about 200°C. A first pressure shell circumferential slip-on flange 50 is disposed on one end of the cylinder 100 which includes a bore 152 therethrough through which the protection tube cylinder 84 of the probe assembly 12 extends and a plurality of bores 154 therethrough through which bolts 156 are disposed to secure the pressure shell assembly 14 to the heater assembly 16 and the adapter assembly 18. A second pressure shell circumferential flange 158 is disposed on the opposite end of the cylinder 100 from the first slip-on flange 150 which includes a plurality of bores 160 therethrough through which bolts 162 are disposed to secure the pressure shell assembly 14 to a pressure shell blind flange 164. The blind flange 164 includes a plurality of bores 166 therethrough through which bolts 162 are disposed to secure the blind flange 164 to the second pressure shell flange 158. The second pressure shell flange 158 and the blind flange 150 preferably have substantially the same dimensions.

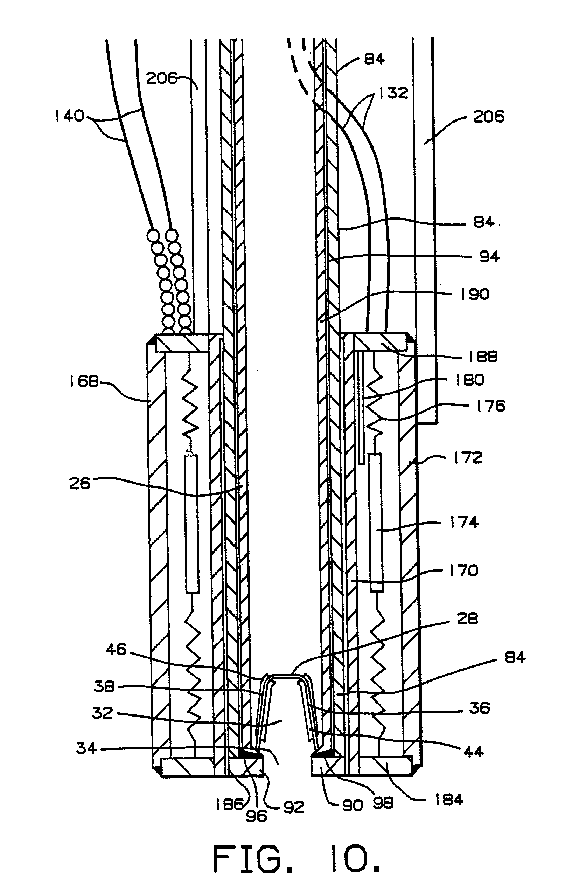

The heater assembly 16 (Figures 1 and 9 through 12) surrounds the electrochemical cell 28 in order to maintain the electrochemical cell 28 at a temperature of between about 800°C, preferably at a temperature of between about 800°C and about 1500°C. The heater assembly 16 includes a heater shell 168 formed of inner and outer hollow heater cylinders 170 and 172, respectively, which surround the elecrochemical cell 28. A heater 174 is located in the annular space 176 between the heater cylinders 170 and 172. Preferably, the heater 174 is a clam shell type heater. A high temperature cement is used to pack the annular space 176 between the heater cylinders 170 and 172 not consumed by the heater 174. Heater wires 140 lead from the heater 174 to heater wire

connectors 178 and from the heater wire connectors 178 through the bore 134 in the pressure shell cylinder 100, the fitting 136 and the fitting 138. A thermocouple 180, preferably a K-type (chromel - alumel) is disposed within the heater shell 168 to monitor the temperature of the heater 174. Thermocouple wires 132 lead from the thermocouple 180 to a thermocouple wire connector 182 and from the thermocouple wire connector 182 through the bore 126 in the pressure shell cylinder 100, the fitting 128 and the fitting130. A lower annular cap 184, having a bore 186 therethrough corresponding to the size of the protection tube cap 90, is fixedly disposed at the lower end of the cylinders 170 and 172. The upper end of the heater shell 168 is formed by an upper removable annular cap 188 disposed at the upper end of the cylinders 170 and 172. The upper annular cap 188 is removable to allow access to the heater 174 and the thermocouple 180. The protection tube cylinder 84, heater wires 140 and the thermocouple wires 132 extend from the heater shell 168 upwardly through the bores 190, 192 and 194, respectively, in the upper annular cap 188. The heater shell 168 is supported by a heater circumferential flange 196. The heater flange 196 includes a bore 198 therethrough through which the protection tube cylinder 84 of the probe assembly 12 extends, a plurality of bores 200 therethrough through which bolts 156 are disposed to secure the heater assembly 16 to the pressure shell assembly 14 and the adapter assembly 18, a plurality of bores 202 therethrough through which bolts 64 are disposed to secure the heater assembly 16 to the flange 60 of the sensor assembly 20 and a bore 204 through which the heater wires 140 and the thermocouple wires 180 pass. Three rods 206 extend from the upper cap 188 and are secured within bores 208 in the heater flange 196.

The adapter assembly 18 (Figures 1 and 13) of the analyzer 10 includes a hollow adapter cylinder 20 having a bore 212 through a side thereof for a fitting (not shown). The fitting can be used to install a static sensing device such as a pressure gage or thermocouple, or to supply an inert gas for purging the area in the immediate vicinity of the heater 174 as well as the electrochemical cell 28. An adapter circumferential slip-on flange 214 is disposed on the end of the adapter cylinder 210 nearest the bore 212. The adapter slip-on flange 214 has a bore 216 therethrough through which the protection tube cylinder 84 and the rods 206 extend and a plurality of bores 218 therethrough which are aligned with associated bores 154 in the first pressure shell flange 150 and the bores 202 in the heater flange 196 for bolts 156 when the analyzer 10 is assembled. Because the adapter slip-on flange 214 is adapted to mate with the first pressure shell flange 150 of the pressure shell assembly 14 and the heater flange 196, the adapter slip-on flange 214 preferably has substantially the same dimensions as the first pressure shell flange 150 and the heater flange 196. An adapter circumferential blind flange 220 is disposed on the opposite end of the adapter cylinder 210 from the adapter slip-on flange 214. The adapter blind flange 220 is adapted for mounting on the tee 222 from the gasification plant piping and, therefore, preferably, the adapter blind flange 220 has substantially the same dimensions as the tee 222. The adapter blind flange 220 and the tee 222 have bores 224 and 226, respectively, therethrough through which the protection tube cylinder 84 and the rods 206 extend to put the electrochemical cell 28 in flow communication with the process gas to be analyzed. A plurality of bores 228 through the blind flange 220 are aligned with associated bores 230 in the tee 222 to enable the adapter blind flange 220 and the tee 222 to be secured together by bolts 232.

When the analyzer 10 of the invention is assembled, the bores 62 of the flange 60 of the sensor assembly 20 are aligned with the associated bores 202 of the heater flange 196, bolts 64 are inserted within the bores 62 and 202 and nuts 234 are tightened thereon. A gasket 26 is disposed between the pressure shell blind flange 164 and the second pressure shell slip-on flange 158. The bores 166 of the pressure shell blind flange 164 are aligned with the associated bores 160 in the second pressure shell slip-on flange 158, bolts 162 are disposed within the bores 166 and 160 and nuts 238 are tightened thereon. Gaskets 240 and 242 are disposed between the first pressure shell slip-on flange 150 and the heater flange 196 and between the heater flange 196 and the adapter slip-on flange 212, respectively. The bores 154 of the first pressure shell slip-on flange 150, the bores 200 of the heater flange 196 and the bores 218 of the adapter slip-on flange 214 are aligned, bolts 156 are disposed within the bores 154, 200 and 218 and nuts 244 are tightened thereon. A gasket 246 is disposed between the adaptor blind flange 220 and the tee 222. The bores 228 of the adapter blind flange 220 and the associated bores 230 of the tee 222 are aligned, bolts 230 are disposed within the bores 228 and 230 and nuts 248 are tightened thereon.

An inert gas, such as nitrogen or carbon dioxide, flows through the calibration gas inlet 108 to the second calibration gas conduit 110 and the first calibration gas conduit 74 to the protection tube cylinder 84 and through the diffusion port 34 to the process side 36 of the cavity 32 during start up of the gasifier to dilute the reference gas flowing into the process piping and to purge the calibration gas lines before switching calibration gases, particularly between a reducing calibration gas, such as a gas simulating the fuel gas produced by the gasifier, and an oxidizing calibration gas such as air. A calibration gas, having a known oxygen or fuel gas concentration, flows through the calibration gas lines once they have been purged by the inert gas when it is desired to calibrate the system. The flow of the inert or calibration gas through the calibration gas lines is stopped when it is desired to measure the concentration of the process gas stream, such as when the gasifier has reached its steady state operation. A reference gas, such as air, flows through the reference gas inlet 120 to the second reference gas conduit 122 and the first reference gas conduit 78 to the sensor cylinder 26 and comes in contact with the reference side 38 of the cavity 32 of the electrochemical cell 28. The flow of the reference gas is maintained throughout the operation of the analyzer

IO. The reference gas and inert or calibration gas flow into the analyzer IO through their respective inlets I20 and I08 at a pressure in excess of the pressure at which the gasifier is operating and so that preferably the pressure differential between the process side 36 and the reference side 38 of the cavity 32 of the electrochemical cell 28 is less than about IO psig. During the operation of the analyzer IO, the heater I74 operates to maintain the electrochemical cell 28 at a temperature of at least about 800°C.

The electrochemical cell 28 measures the concentration of fuel gases or oxygen in the process gas stream depending on the conditions present in the stream. The difference in the partial pressure of oxygen between the reference gas and the process gas stream causes oxygen ions to diffuse from the reference gas through the electrolyte to the electrochemical cell 28 toward the lower oxygen partial pressure of the process gas in the cavity 32 of the electrochemical cell 28. A preselected external voltage, based on the current carrying capacity of the reference electrode 46 of the electrochemical cell 28 and the concentration range of the gases to be analyzed, is applied to the electrodes 44 and 46 to excite the cell 28. Under reducing conditions in the process gas stream, the fuel gases diffuse from the process gas stream through the diffusion limiting port 34 into the cavity 32 of theelectrochemical cell 28. Oxygen ions from the reference gas pass through the electrolyte to the cavity 32 and react with the fuel gases to form the combustion products water and carbon dioxide. The anode electrode is the process side electrode 44 and the cathode electrode is the reference electrode 46. The reaction at the cathode is:

$$O_2 + 4e^- \rightarrow 2O{-}{-}$$

and the reactions at the anode are:

$$CO + O^{--} \rightarrow 2e^- + CO_2 \text{ or}$$
$$H_2 + O^{--} \rightarrow 2e^- + H_2O.$$

The combustion products diffuse back to the process gas stream from the cavity 32 through the diffusion limiting port 34. Under neutral or oxidizing conditions in the process gas stream, oxygen ions passing from the reference gas to the cavity 32 of the electrochemical cell 28 react in the cavity 32 to form oxygen which diffuses from the cavity 32 through the diffusion limiting port 34 to the process gas stream. In this situation, the reaction at the cathode is:

$$O_2 + 4e^- \rightarrow 2O^{--}$$

and the reaction at the anode is:

$$2O^{--} \rightarrow 4e^- + O_2$$

The diffusion of oxygen ions from the reference gas to the process gas stream creates a potential difference between the electrodes 44 and 46 and causes a current to flow between the electrodes 44 and 46 the voltage of which can be measured and correlated with the concentration of the fuel gases or oxygen in the cavity 32 according to the Nernst equation:

$$\ln (P_r/P_s) = (n*E*F)/(R*T), \text{ where}$$

$P_r$ is the oxygen partial pressure of the reference gas;

$P_s$ is the oxygen or fuel gas partial pressure of the process gas;

n is 4, the number of electrons transferred in the half cell equation;

E is the voltage measured by the reaction;

F is Faraday's Number;

R is the Universal gas constant; and

T is the absolute temperature of the gases.

The concentration of the fuel gases or oxygen in the cavity 32 of the electrochemical cell 28 is related to the concentration of the gases in the process gas stream by the diffusion rates of the gases from the process gas stream through the diffusion limiting port 34 to the cavity 32.

The analyzer I0 includes apparatus to determine the voltage across the electrodes 44 and 46 and to convert that voltage to an indication of the oxygen or fuel gas partial pressure in the process gas stream according to the Nernst equation. The analyzer I0 is capable of analyzing a process gas stream containing oxygen or fuel gas and is capable of responding to changes in the concentration of the oxygen or fuel gas in less than about 20 seconds, preferably between about 5 seconds and about I0 seconds.

## Claims

1. A gas gauge device for measuring the concentration of oxygen and combustible gases in a gas stream, comprising:

an electrochemical cell of radius R and length L, in which a cavity is formed having a diffusion limiting port of radius 'r' forming the entrance to said cavity, the electrochemical cell having a reference side and a process side, characterized by the size of said diffusion limiting port being determined according to the relationship:

$r = W/(k*D*C)$, where

r is the radius of said diffusion limiting port;

W is the diffusion rate of combustible gases in said gas stream through said diffusion limiting port;

D is the diffusion coefficient of said combustible gases in said gas stream;

C is the concentration of said combustible gases in said gas stream; and

$k = 2*\pi*R^2/((2*r*1) + R^2)$, where

R is the radius of said electrochemical cell and

1 is the difference between the length L and the radius R of said electrochemical cell, said process side being flow communication with the portion of said gas stream flowing into said cavity through said diffusion limiting port, said reference side being in flow communication with a reference gas stream; said electrochemical cell being additionally characterized by:

heating means for maintaining said electro chemical cell at a temperature of at least about 800°C;

a pair of electrodes, one of said electrodes being attached to said process side of said electrochemical cell and the other of said electrodes being attached to said reference side of said electrochemical cell for establishing a potential difference across said electrochemical cell such that oxygen ions flow from said reference gas stream to said gas stream through said electrochemical cell in the direction of lower oxygen partial pressure to create an electrical current;

means for measuring said established voltage;

means for measuring said current at said established voltage; and

means for translating said measurement of said current at said established voltage under reducing conditions into an indication of the concentration of the combustible gases in said gas stream and under oxidizing conditions into an indication of the oxygen concentration in said gas stream.

2. The device of claim 1 wherein said electrochemical cell is mounted at one end of an elongated cylinder.

3. The device of claim 2 wherein said device includes a pressure shell in which said elongated cylinder is mounted having a passageway therethrough through which said elongated cylinder and said electrochemical cell protrude.

4. The device of claim 3 wherein said device includes means for releasably mounting said device on apparatus through which said gas stream is flowing so that said cavity of said electrochemical cell is in flow communication with said gas stream.

5. The device of claim 1 wherein said electrochemical cell is formed cf a composition including an oxide capable of conducting oxygen ions.

6. The device of claim 1 further comprising means for maintaining the pressure differential between said process side and said reference side of said cavity of said electrochemical cell at a level less than about 10 psig.

0281375

FIG. 1.

0281375

FIG. 2.

FIG. 3.

J281375

0281375

FIG. 4.

FIG. 5.

24

14

FIG. 8.

14

FIG. 7.

FIG. 6.

0281375

FIG. 11.

FIG. 12.

FIG. 9.

FIG. 10.

FIG. 13.

0281375